# EUROPEAN PATENT APPLICATION

(11) **EP 3 032 365 A1**
(43) Date of publication of application: **15.06.2016**
(21) Application number: 15197639.6
(22) Date of filing: 02.12.2015
(51) Int. Cl.: G05B 19/042

(54) **SYSTEMS AND METHODS FOR MEMORY MAP UTILIZATION**

(30) Priority: 10.12.2014 US 201414566194
(71) Applicant: General Electric Company, Schenectady, NY 12345 (US)
(72) Inventor: CARGNELLI, Claudio, Toronto, Ontario M9B 4P1 (CA); ALLCOCK, David John, Markham, Ontario L6E 1B3 (CA)
(74) Representative: Cleary, Fidelma

(57) **Abstract**

Systems and methods are provided. In one embodiment, a system comprises an electronic device (22,24,26) configured to be used in an industrial control system (10). The electronic device (22,24,26) includes a processor (34,36,38) and a memory (40,48,50). The electronic device (22,24,26) additionally includes a backwards compatible memory map stored in the memory (40,48,50), wherein the electronic device (22,24,26) is configured to provide for a backwards compatibility mode of operations by applying the backwards compatible memory map and at least one memory map setpoint, wherein the backwards compatibility mode of operations provides for communications with an external device (28,30), and wherein the at least one memory map setpoint is included in an older version of the electronic device (22,24,26).

## Description

### BACKGROUND OF THE INVENTION

The subject matter disclosed herein relates to industrial controllers and devices, and more particularly, to systems and methods for interfacing industrial controllers and devices with other industrial controllers and devices.

In the protection, control, and metering industry, different components (motor controllers, meters, protection relays, etc.) in a protection, control, or a metering system may need to be replaced or updated at different times. New components may include more advanced features such as faster processors, improved communication circuitry, wireless capabilities, or a combination thereof. However, in certain instances, the new capabilities may cause new components to be incompatible with the older components in the system. If a new component does not match the characteristics of the legacy device that the new component is replacing, the updated system may not work as desired. Additionally, it may not be economical to replace the system when it would be desired to replace a single component or small number of components.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system comprises an electronic device configured to operate in an industrial control system. The electronic device includes a processor and a memory. The electronic device additionally includes a backwards compatible memory map stored in the memory, wherein the electronic device is configured to provide for a backwards compatibility mode of operations by applying the backwards compatible memory map and at least one memory map setpoint, wherein the backwards compatibility mode of operations provides for communications with an external device, and wherein the at least one memory map setpoint is included in an older version of the electronic device.

In a second embodiment, a tangible non-transitory machine readable media is provided. The machine readable media includes executable code configured to receive a first instruction from an external system and to determine a setpoint for a backwards compatible memory map based on the first instruction. The code is further configured to execute a second instruction based on the backwards compatible memory map and the setpoint and to determine if a desired response time has elapsed. The code is additionally configured to delay until the desired response time has elapsed and to respond to the external system.

In a third embodiment, a method for interfacing with an external device in an industrial system is provided. The method includes using a processor included in an electronic device to perform various steps. The steps include determining a setpoint for a backwards compatible memory map based on a first instruction received from the external device and executing a second instruction based on the backwards compatible memory map and the setpoint. The steps further include determining if a desired response time has elapsed and delaying until the desired response time has elapsed. The steps additionally include responding to the external device.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system, including a plurality of devices having memory maps;
FIG. 2 is a flow chart of an embodiment of a process suitable for supporting a backwards compatibility mode for the devices of FIG. 1 via a memory map; and
FIG. 3 is a diagram of embodiments of a plurality of memory maps stored in a device of the industrial control system of FIG. 1.

### DETAILED DESCRIPTION OF THE INVENTION

One or more specific embodiments of the invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the invention, the articles "a," "an," "the," and "said" are intended to mean that there are one or more of the elements. The terms "comprising," "including," and "having" are intended to be inclusive and mean that there may be additional elements other than the listed elements.

The disclosed embodiments include a system and a method suitable for dynamically providing for a backwards compatible mode for embedded devices, controllers (e.g., industrial motor controllers, industrial controllers), sensors, relays, and the like. More modern devices, such as the aforementioned devices, may no longer support older modes of operation, such as master/slave mode of operations and/or modes of operation that requires certain desired timing (e.g., slower signaling between master and slave devices). For example, the firmware of older devices may have included communications protocols communication at slower rates, as well as a different processing behavior and data types. One technique to provide backwards compatibility of older devices in newer devices would include emulation of the older devices. However, such emulation may be too costly and/or complex. The techniques described herein provide for a backwards compatibility mode of operations by using a dynamic memory map. The dynamic memory map may provide for a mechanism by which older device behavior is provided via a memory map lookup facility, and may provide the desired data at a desired timing. By applying the techniques described herein, a newer device may be disposed in an older network and behave *in lieu* of an older device. Indeed, by utilizing the techniques disclosed herein, newer devices may support older communication networks in addition to or alternative to supporting more modern communication networks, thus providing for enhanced deployment flexibility.

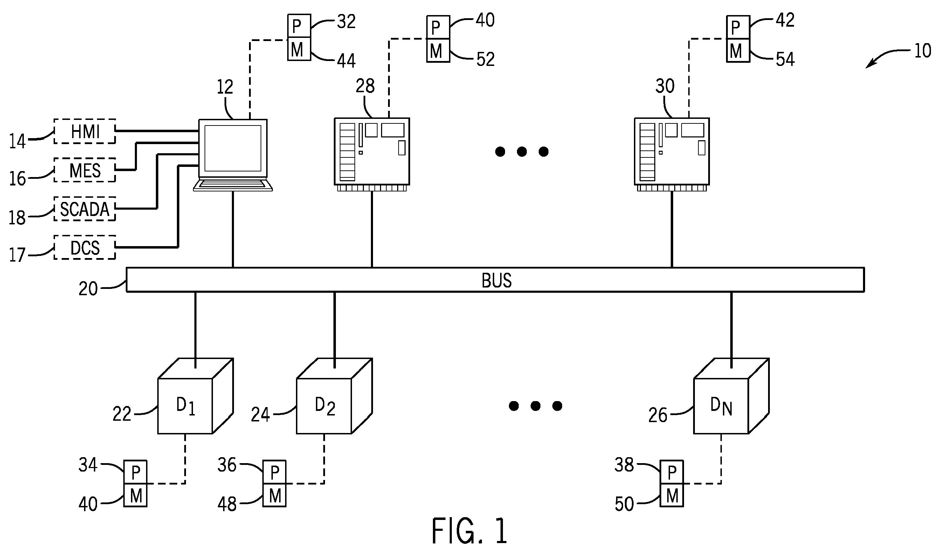

It may be beneficial to describe an embodiment of an industrial process control system that may include the techniques described herein. Turning to FIG. 1, an embodiment of an industrial process control system 10 is depicted. A computer workstation 12 is depicted, suitable for executing a variety of computer programs, such as configuration and monitoring applications, and provides an operator interface through which an engineer or technician may monitor the components of the industrial process control system 10. The computer workstation 12 may be any type of computing device suitable for running software applications, such as a laptop, a workstation, a tablet computer, or a handheld portable device (e.g., personal digital assistant or cell phone). Indeed, the computer workstation 12 may include any of a variety of hardware and/or operating system platforms. In one example, the computer 12 may be a personal computer executing an operating system such as a version of the Windows™ operating system. However, alternative embodiments of the invention can potentially run on any one or more of a variety of operating systems, such as Unix™, Linux™, Solaris™, Mac OS™, and so forth.

In accordance with one embodiment, the computer 12 may host an industrial automation system such as an HMI system 14, a MES 16, a DCS system 17, and/or a SCADA system 18. Further, the computer 12 is communicatively connected to a communications bus 20 suitable for enabling communication between the computer 12 and devices D₁ 22, D₂ 24, and D₃ 26. The devices 22, 24, and 26 may include field devices such as industrial motor controllers, sensors, valves, actuators, and the like, suitable for use in industrial applications. It is also to be noted that the devices 22, 24, and 26 may include devices suitable for use in residential applications, such as home automation applications. The devices 22, 24, and 26 may include industrial devices that support newer client/server communications protocols (e.g. producer/consumer protocols), such as DeviceNet, Fieldbus Foundation™ protocols that include support for the Foundation H1 bi-directional communications protocol, and the like. The devices 22, 24, and 26 may also include support for older communication protocols, including master/slave protocols, such as those included in ModBus™ communications protocol, HART protocol, and the like. The device 22 may be, for example, a MM300 motor manager (e.g., industrial motor controller) available from General Electric Company of Schenectady, New York, suitable for providing motor control and protection of industrial motors (e.g., low voltage motors).

In the depicted embodiment, two industrial controllers (e.g., programmable logic controllers [PLCs]) 28 and 30 are also connected to the bus 20. The PLCs 28 and 30 may use the bus 20 for communicating with and controlling any one of the devices 22, 24, and 26. The bus 20 may be any electronic and/or wireless bus suitable for enabling communications, and may include fiber media, twisted pair cable media, wireless communications hardware, Ethernet cable media (e.g., Cat-5, Cat-7), and the like. Further, the bus 20 may include several sub-buses, such as a high speed Ethernet sub-bus suitable for connecting system 10 components at communication speeds of 100 MB/sec and upwards. The bus 20 may also include an RS485 sub-bus suitable for serial communications via older protocols, such as ModBus. Indeed, a number of interconnected sub-buses of the bus 20 may be used to communicate amongst the components of the system 10.

It is to be noted that the industrial process control system 10 depicted in FIG. 1 is greatly simplified for purposes of illustration. The number of components is generally many times greater than the number of depicted components. This is especially the case with regard to the number of depicted devices 22, 24, and 26. Indeed, in an industrial environment, the number of devices may number in the hundreds for the industrial process control system 10.

Each one of the systems 12, 22, 24, 26, 28, and 30 includes a respective processor 32, 34, 36, 38, 40, 42 and memory 44, 46, 48, 50, 52, 54. Additionally, each system 12, 22, 24, 26, 28, and 30 may use multiple processors and/or memory. The processors 32, 34, 36, 38, 40, 42 may be microprocessors, microcontrollers, custom processors, and the like, suitable for executing computer code or instructions, such as instructions stored in the memory 44, 46, 48, 50, 52, 54. In operations, the PLCs 28, 30 may issue commands or data requests to the devices 22, 24, and/or 26. The techniques described herein enable the issuance of instructions for older devices. For example, the MM3 motor manager 22 may be issued instructions pertaining to an older MM2 motor manager, or al older version of the electronic device 22. That is, the instructions may include certain memory addresses and the like, that would have been supported in an older device, such as the MM2 motor manager. However, newer devices may have a different memory architecture, for example, and thus applying the older instructions (e.g., MM2 instructions) in a newer device may result in an error or in unexpected behavior. The techniques described herein provide for a backwards compatibility mode in which an external device (e.g., PLC 28) may transmit instructions directed at older devices, but instead are received by newer devices, processed, and data then transmitted to the first device without the first device being aware that the newer devices is not an older device. Accordingly, newer devices 22, 24, 26 may be installed *in lieu* of older devices without the rest of the industrial control system 10 having to be reconfigured, saving time and cost.

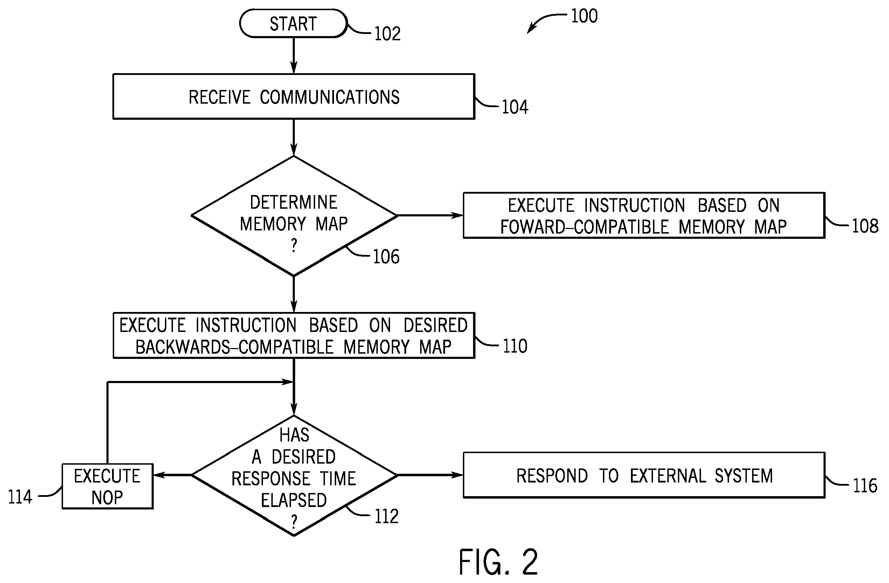

Turning now to FIG. 2, the figure depicts an embodiment of a process 100 suitable for execution in newer devices 22, 24, 26 that may be used to provide backwards compatibility modes so that the devices 22, 24, 26 may support communicative data exchanges *in lieu* of older devices. The process 100 may be implemented as non-transitory computer code or instructions executable by the processors 32, 34, 36, 38, 40, 42 and stored in the memories 44, 46, 48, 50, 52, 54.

The process 100 may begin at block 102, and then receive communications (block 104), for example, from the PLCs 28, 30 (e.g., external devices). In one embodiment, the recipient device (e.g., devices 22, 24, 26) may have been commissioned or "set up" manually, e.g., via a hardware or a software switch, to always respond to communications (block 104) in backwards compatibility mode. In another embodiment, the process 100 may dynamically determine if the communications (block 104) is directed at an older device and may thus enter a backwards compatibility mode based on certain derivations described in more detail below.

Accordingly, the process 100 may determine (decision 106) if the devices 22, 24, 26 should continue processing with a backwards compatible mode memory map or a new, forward compatible memory map. The determination (decision 106) of which memory map to use may vary based on automatic determination or manual determination. As mentioned earlier, the device 22, 24, 26 may have been commissioned to always use compatibility mode, accordingly, decision 104 may determine, for example, via a "backwards-compatibility = ON" software switch (e.g., variable) and/or a hardware switch, that the backwards compatible memory map should be used. In certain embodiments, the process 100 may automatically derive (decision 106) that the backwards compatibility mode is desired, for example, by analyzing the transmitted instructions. In this embodiment, the transmitted instruction may be analyzed, for example, by determining a desired setpoint or memory address. The setpoint may be compared against a numeric setpoint range and if the setpoint falls within this range then the backwards compatibility mode may be used. In other embodiments, instruction headers, function codes, speed of communications, or a combination thereof, may be used to determine if backwards compatibility mode is desired. It is to be noted that multiple backwards compatible memory maps may be used, for example, to provide compatibility for a plurality of older devices from the same and/or from different manufacturers. Accordingly, the determination (decision 106) of which memory map to use may analyze two, three or more memory maps.

If the process 100 determines (decision 106) that backwards compatibility mode is not desired, then the process 100 may execute (block 108) the instructions based on a forward compatibility memory map (e.g., newer device memory map). However, if the process 100 determines (decision 106) that backwards compatibility mode is desired, then the process 100 may execute (block 110) the instructions based on the backwards compatibility mode. Accordingly, the process 100 may find the backwards compatibility mode memory map in the memory and derive the appropriate instructions, formats, error checking, byte-ordering (e.g., little Endian, big Endian), and so on, when executing (block 110) the instructions.

Because older devices may process instructions in a slower time when compared to the newer devices 22, 24, 26, the process 100 may determine (decision 112) if a desired response time has elapsed. For example, older RS485 devices (e.g., ModBus) may communicate at slower speeds when compared to newer DeviceNet devices 22, 24, 26. The desired response time may be determined dynamically or stored in memory as suitable for use with a given backwards compatible memory map. When determined dynamically, the process 100 may, for example, use the rate at which signals appear to be received from external systems (e.g., PLCs 28, 30) and use a similar transmission rate. If a desired response time has not elapsed (decision 112), the process 100 may execute (block 114) a NOP instructions (e.g., do nothing) and iterate back to decision 112. If the process 100 determines that sufficient time has elapsed (decision 112), then the process 100 may respond (block 116) to the external system with the desired data. By selecting the appropriate memory map and by waiting a desired amount of time, the process 100 may provide for full backwards compatibility with a number of older devices, increasing flexibility of deployment of the devices 22, 24, 26, and lowering costs. It should also be noted that the backwards compatible memory maps may include only a subset of instructions typically used by older devices, for example, only instructions that the older devices may have used to response to external systems (e.g., PLCs 28, 30).

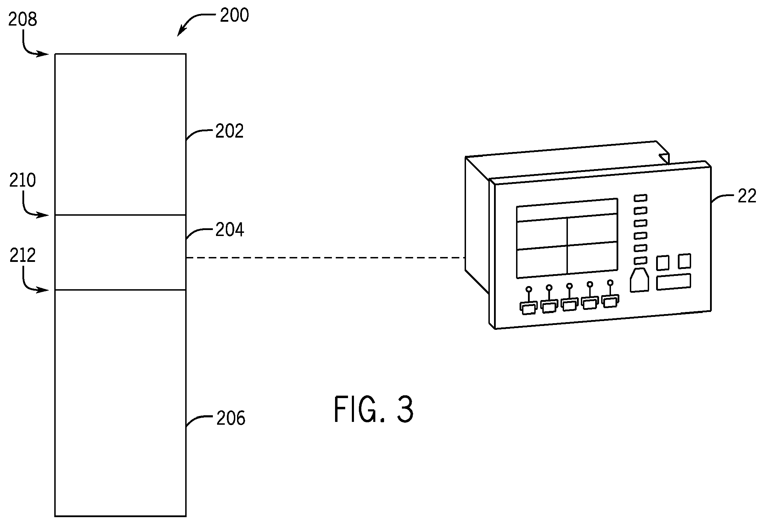

Turning now to FIG. 3, the figure depicts an embodiment of a memory section 200 included in the memory 46 of the device 22. As depicted, the memory section 200 includes three memory maps 202, 204, and 206, respectively. The first memory map 202 may be a backwards compatible memory map for providing, for example, compatibility one version behind the current device 22. The second memory map 204 be a backwards compatible memory map providing, for example, compatibility two versions behind the current device 22. The memory map 206 may be used, for example, to provide backwards compatibility for an older device from a different manufacturer. Each map may begin at an address 208, 210, and 212, respectively. It is to be noted that, while the figure depicts the memory maps 202, 204, and 206 as contiguous, in other embodiments, the memory maps 202, 204, and 206 be stored in non-contiguous portions of the memory 46 or in memories separate from each other but included in the device 22. Indeed, in some embodiments, such as embodiments where the memory maps 202, 204, 206 are each stored in a separate memory, the addresses 208, 210, 212 may be the same and/or overlap. As mentioned above, the maps 202, 204, 206 may be used when backwards compatibility is desired, as described in further detail below with respect to Table 1.

**TABLE 1 - Embodiment of Backwards Compatibility Memory Map**

| SETPOINT | ADDRESS | DESCRIPTION | RANGE | STEP VALUE | UNITS AND SCALE | FORMAT |
|---|---|---|---|---|---|---|
| | OFFSET | | | | | |
| 30049 | 48 | Phase Current Scale Factor | --- | --- | --- | F1 |
| 30050 | 49 | Phase A Current | --- | --- | ** | F1 |
| 30051 | 50 | Phase B Current | --- | --- | ** | F1 |
| 30052 | 51 | Phase C Current | --- | --- | ** | F1 |
| 30053 | 52 | Ground Current | --- | --- | 0.1 x A | F1 |
| 30054 | 53 | Motor Load | --- | --- | %FLC | F1 |
| 30055 | 54 | Thermal Capacity | --- | --- | % | F1 |
| 30056 | 55 | Current Unbalance | --- | --- | % | F1 |
| 30057 | 56 | Acceleration Time | --- | --- | 0.1 x s | F1 |
| 30058 | 57 | Last Starting Current | --- | --- | ** | F1 |
| 30059 | 58 | O/L Time to Trip | --- | --- | s | F1 |
| 30060 | 59 | Power - high order | --- | --- | 0.1 x | F3 |
| 30061 | 60 | Power - low order | --- | --- | 0.1 x | F3 |
| 30062 | 61 | Power (scaled) | --- | --- | kW | F21 |
| 30063 | 62 | Energy Used - high order | --- | --- | 0.1 xkWh | F2 |
| 30064 | 63 | Energy Used - low order | --- | --- | 0.1 xkWh | F2 |
| 30065 | 64 | Voltage | --- | --- | V | F1 |
| ... | ... | ... | ... | ... | ... | ... |
| 44113 | 4112 | Starter Type | 0-11 | 1 | --- | F11 |
| 44114 | 4113 | Change-over Current | 10-51 | 1 | 0.1 | F1* |
| 44115 | 4114 | Change-over Time | 1-100 | 1 | s | F1 |
| 44116 | 4115 | Transfer Time | 1-125 | 1 | s | F1 |
| 44117 | 4116 | Ramp Up Time | 1-125 | 1 | s | F1 |
| 44118 | 4117 | Ramp Down Time | 1-125 | 1 | s | F1 |
| 44119 | 4118 | Stage One Shorting Time | 1-125 | 1 | s | F1 |

For illustrative example only, the Table 1 above depicts an embodiment of the memory map 202 depicted in FIG. 3. The depicted Table 1 embodiment may be suitable for backwards compatibility directed at ModBus communications. Accordingly, a ModBus address (e.g., setpoint) column may be used to denote the address for the instruction transmitted to the devices 22, 24, 26. An Address Offset column may be used to provide for a decimal (shown) or hexadecimal address (not shown) value to offset from a known address. For example, referring now to the first row of Table 1, the address offset of 48 by be added to a known starting address of 30001 to arrive at 30049. Accordingly, transmission bandwidth may be minimized by transmitting the offset rather than the full address. A Description column includes a human-readable description of the instruction at the given address, useful in providing, for example, to control engineers or programmers, a textual description of the instructions functionality at the given row. A Range column may be used to describe a range of values that the instruction may return as output or may provide as input. A Step Value column may be used to denote a number of steps that certain instructions may execute during execution. A Units and Scale column may be used to denote a unit of measure (e.g., kilowatts, Celsius, Pascal, and the like) or a scale factor used. A Format column may be used to denote a data formatting or data structure arrangement of data. For example, code "F1" may be used to denote unsigned integer, numerical data, code "F2" may be used to denote unsigned long integer, numeric data, and code "F3" may be used to denote signed long integer, numeric data. More details of function codes, for example, with respect to ModBus communications, may be found in ModBus protocol manuals available from Scheiner Electric of Palatine, Illinois (formerly known as Modicon Corporation).

In one example, the PLC 28 may transmit the instruction "5 04 49 1 CRC", for example, using ASCII (e.g., ASCII ModBus communications protocol). Such an instruction may be directed at what the PLC 28 believes is an older device, but instead, newer devices, e.g., device 22 may interpret the instruction using the memory map 202. The determination of which memory map to use would follow, for example, process 100 described above with respect to FIG. 2. Supposing that process 100 determine that the instruction corresponds to memory map 200. Then, '5' would be interpreted as the device address (e.g., address of device 22), '04' would be interpreted as 'read input registers', and '48' would be interpreted as offsetting from 30001, thus corresponding to 30050 in the memory map 202. '1' may be interpreted to read one data value starting at the 30050 address, which according to the memory map 202, would correspond to a current value for a phase of a motor. "CRC" would be interpreted as the error correction or check to use, in this case, cyclic redundancy check. The value may then be returned, after a desired wait time, to the external calling entity (e.g. PLC 28) via a response that may look like "5 04 AA CRC" where "5" is the device's address, "04" is the repeated read command, "AA" is the data that was read based on the phase current of the motor, and "CRC" is the error correction or check used. Accordingly, the PLC 28 may communicate and work with the device 22 using older communications in the backwards compatibility mode. By providing for one or more backwards compatible memory maps, the techniques described herein may more efficiently communicate *in lieu* of older devices, thus enabling a more controlled or gradual upgrade of industrial systems.

Technical effects of the invention include the ability to more efficiently communicate with newer devices in a backwards compatibility mode. Technical effects further include including a memory map in newer devices, wherein the memory map may include older device addresses, functions, formats, and the like, useful in providing the backwards compatibility mode. Multiple memory maps may be used, each supported a different device version and/or devices from a different manufacturer. The backwards compatibility mode may additionally include timing adjustments useful in communication with older devices at the older device's preferred timing rate. By utilizing the memory maps described herein, and the timing adjustments, a more efficient, backwards compatibility mode is provided.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (22,24,26) comprising:
an electronic device configured to operaate in an industrial control system (14,16,17,18) comprising:
a processor (34,36,38);
a memory (40,.48,50); and
a backwards compatible memory map stored in the memory (40,48.50), wherein the electronic device (22,24,26) is configured to provide for a backwards compatibility mode of operations by applying the backwards compatible memory map (202,204,206) and at least one memory map setpoint, wherein the backwards compatiblity mode of operations provides for communications with an external device (28), and wherein the at least one memory map setpoint (202,204,206) included in an older version of the electronic device (22).

2. The system of claim 1, wherein the backwards compatible memory map (202,204,206) comprises an address offset and wherein the processor (34,36,38) is configured to receive a communications data from the external device (28) and to derive the at least one memory map setpoint based on the communications data and the address offset.

3. The system of claim 1 or 2, wherein the memory (40,48,50) comprises a processor-excutable code, and wherien the processor (34,36,38) is configured to execute the processor-executable code based on the backwards compatible memory map (202,204,206) and the at least one memory map setpoint.

4. The system of claim 3, wherein the processor (34,36,38) comprises a register, and wherein the processor (34,36,38) is configured to read data from the register, write data to the register, or a combination thereof, based on the at least one memory map setpoint.

5. The system of any of claims 1 to 4, wherein the backwards compatible memory map (202,204,206) comprises a range, a step, a unit of measure, a format code, or a combination thereof and/or the at least one memory map setpoint comprises a ModBus-compatible address.

6. The system of any preceding claim, wherein the electronic device (22,24,26) comprises an industrial motor controller configured to receive an input power and to provide an output power suitable to drive an electric motor.

7. The system of any preceding claim, wherein the external device (28) comprises an industrial controller configured to control plant operations, receive operator commands, determine plant operation commands, issue commands to other devices in the industrial system, monitor the industrial system, collect data about the industrial system, or a combination thereof.

8. The system of any preceding claim, wherein the backward compatible mode of operations includes communicating with other devices in the industrial system (14,16,17,18) at compatible time intervals.

9. The system of claim 8, wherein the compatible time intervals are dynamically determined by the processor (34,36,38) or are stored in the memory (40,48,50) of the electronic device (22,24,26).

10. The system of any preceding claim, wherein the backwards compatible memory map (202,204,206) provides for the backwards compatibility mode of operations when an a hardware or a software switch is actuated.

11. A method for interfacing with an external device (28) in an industrial system comprising:
using a processor (34,36,38) included in an electronic device (22,24,26) to perform the steps of:
determining a setpoint for a backwards compatible memory map (202,204,206) based on a first instruction received from the external device (28);
executing a second instruction based on the backwards compatible memory map (202,204,206) and the setpoint;
determining if a desired response time has elapsed;
delaying until the desired response time has elapsed; and
responding to the external device (28).

12. The method of claim 11, wherien the second instruction comprises reading from a register, writing to the register, or a combination thereof, based on the setpoint.

13. The method of claim 11 or 12, wherein the desired response time comprises a preferred communications rate of an older version of the electronic device (22,24,26).

14. The method of any of claims 11 to 13, wherein the backwards compatible memory map (202,204,206) comprises an address offset and wherein the processor (34,36,38) is configured to interpret the first instruction to derive the at least one memory map setpoint based on the first instruction and the address offset.

15. A computer program comprising computer program code means adapted to perform the method of any of claims 11 to 14, when executed by a computer processor.

16. The computer program of claim 15, embodied on a computer readable medium.
